# EUROPÄISCHE PATENTSCHRIFT

(11) **EP 1 516 161 B1**
(45) Veröffentlichungstag und Bekanntmachung des Hinweises auf die Patenterteilung: **14.08.2013**
(21) Anmeldenummer: 03720072.2
(22) Anmeldetag: 19.05.2003
(51) Int. Cl.: G01F 1/66, G01N 11/04

(54) **VERFAHREN ZUM BESTIMMEN RHEOLOGISCHER PARAMETER EINES FLUIDS**
METHOD FOR DETERMINING RHEOLOGICAL PARAMETERS OF A FLUID
PROCEDE POUR DETERMINER DES PARAMETRES RHEOLOGIQUES D'UN FLUIDE

(30) Priorität: 21.06.2002 DE 10227918
(43) Veröffentlichungstag der Anmeldung: 23.03.2005
(73) Patentinhaber: Bühler AG, 9240 Uzwil (CH)
(72) Erfinder: OURIEV, Boris, CH-9244 Niederuzwil (CH); WINDHAB, Erich, Josef, CH-8261 Hemishofen (CH)
(74) Vertreter: Hepp Wenger Ryffel AG
(86) Internationale Anmeldenummer: PCT/CH2003/000319
(87) Internationale Veröffentlichungsnummer: WO 2004/001344

(56) Entgegenhaltungen:
- WO-A-02/37082
- US-A- 5 835 884
- US-A- 6 067 861

## Beschreibung

Die vorliegende Erfindung bezieht sich auf ein Verfahren und eine Anordnung zum Bestimmen rheologischer Parameter eines strömenden Fluids, insbesondere einer Suspension oder einer Emulsion, gemäss Anspruch 1 bzw. Anspruch 24.

Ähnliche Verfahren und Anordnungen sind bereits bekannt. Hierbei wird die Ultraschall-Doppler-Methode verwendet, um für das in einem Strömungskanal fliessende und suspendierte oder emulgierte Partikel mitführende Fluid ein lokales Geschwindigkeitsprofil quer zur Leitung zu bestimmen. Ausserdem wird durch eine Messung des statischen Druckes stromauf und stromab von dem Bereich des bestimmten lokalen Geschwindigkeitsprofils eine Druckdifferenz entlang der Strömungsrichtung im Bereich des lokalen Geschwindigkeitsprofils bestimmt. Aus dem Geschwindigkeitsprofil und der ihm zugeordneten Druckdifferenz können dann bestimmte rheologische Parameter des untersuchten strömenden Fluids, wie z.B. die Viskositätsfunktion (Scherviskosität), die Fliessgrenze etc., bestimmt werden.

Diese Kombination der Ultraschall-Doppler-Methode (UVP, Ultrasound Velocity Profiling) und der Druckdifferenzbestimmung (PD, Pressure Difference), die der Fachmann kurz als UVP-PD bezeichnet, wurde in zahlreichen Publikationen in verschiedenen Varianten mit stets geringen Abwandlungen beschrieben.

Die Ultraschall-Doppler-Methode zur Bestimmung von Geschwindigkeitsprofilen ist auch aus der US 5835884 oder aus der US 6067861 bekannt. Von der Erfassung einer lokalen Wandschubspannung in einem eine Wand berührenden Bereich des strömenden Fluids ist dort jedoch keine Rede.

In Wo 02/37082 ist ein Verfahren zur Bestimmung der Viskosität eines Fluids beschrieben. Ein piezoelektrischer Schallsender sendet eine longitudinale Welle (Kompressionswelle) durch das Fluid. Ein piezoelektrischer Schallempfänger empfängt die ausgesendete Schallwelle als eine longitudinale Welle und eine tranversale Welle (Scherwelle), wobei zwischen dem Eintreffen der longitudinalen Welle und der transversalen Welle eine Phasendifferenz besteht. Hieraus wird die Ausbreitungsgeschwindigkeit der transversalen Welle und schliesslich die Viskosität des Fluids bestimmt. Von der Erfassung einer lokalen Wandschubspannung oder der Bestimmung von Geschwindigkeitsprofilen eines strömenden Fluids ist hier jedoch keine Rede.

In dem Artikel "Velocity profile measurement by ultrasound Doppler shift method" von Y. Takeda in International Journal of Heat and Fluid Flow", Band 7, Nr. 4, Dezember 1986 wird die Tauglichkeit der UVP-Methodik für die Bestimmung eines eindimensionalen Geschwindigkeitsprofils in Röhrchen oder Blutgefässen mit nur einigen Millimetern Durchmesser bestätigt.

In "Rheological Study of Non-Newtonian Fluids" von E. Windhab, B. Ouriev, T. Wagner und M. Drost, 1st International Symposium on Ultrasonic Doppler Methods for Fluid Mechanics and Fluid Engineering, September 1996 wird das eingangs erwähnte UVP-PD-Verfahren beschrieben.

Eine ausführliche Beschreibung der theoretischen und apparativen Grundlagen des UVP-PD-Verfahrens sowie seine Anwendung bei Schleppscherströmungen und Druckscherströmungen, insbesondere von Modell-Suspensionen oder bei rheologischen Fluiden wie z.B. bei der Schokoladen- oder der Teigwarenherstellung, findet sich in "Ultrasound Doppler Based In-Line Rheometry of Highly Concentrated Suspensions" von B. Ouriev, Diss. ETH Nr. 13523, Zürich 2000. Dort werden sowohl laminare als auch turbulente Strömungen behandelt.

Das hier geschilderte UVP-PD-Verfahren liefert gute Ergebnisse für diverse Arten von Geschwindigkeitsprofilen und für die zu bestimmenden rheologischen Parameter der untersuchten Fluide. Allerdings werden stets die beiden voneinander beabstandeten Messpunkte für die Druckmessung stromauf und stromab von dem bestimmten Geschwindigkeitsprofil benötigt. Heutzutage kann zwar auf wenig intrusive miniaturisierte Ultraschall-Senderempfänger, Ultraschall-Messwandler und Drucksensoren zurückgegriffen werden, doch sind schon durch den aus Gründen der Messgenauigkeit stets erforderlichen Abstand der beiden Druckmesspunkte stromauf und stromab von dem erfassten lokalen Geschwindigkeitsprofil einer weiteren "Kompaktierung" der UVP-PD-Messanordnung durch Zusammenrücken der beiden Drucksensoren Grenzen gesetzt.

Der Erfindung liegt die Aufgabe zugrunde, ein Verfahren und eine Messanordnung bereitzustellen, welche die Ultraschall-Doppler-Methode verwenden und eine kompaktere Messanordnung sowie eine Vereinfachung des Verfahrensaufwandes gegenüber dem UVP-PD-Verfahren des Stands der Technik ermöglichen.

Diese Aufgabe wird durch das Verfahren gemäss Anspruch 1 und die Anordnung gemäss Anspruch 24 gelöst.

Das erfindungsgemässe Verfahren zum Bestimmen rheologischer Parameter eines strömenden Fluids, insbesondere einer Suspension oder Emulsion, verlangt, dass die Fluidströmung zumindest in Teilbereichen von einer das Fluid berührenden Wand begrenzt wird, und weist die folgenden Schritte auf:
a) Einstrahlen eines aus einem Ultraschallsender gesendeten Ultraschallsignals mit mindestens einer vorgegebenen ersten Frequenz f1 unter einem von 90° verschiedenen Winkel Θ zur Strömungsrichtung in die Fluidströmung;
b) Empfangen eines Ultraschallsignals, das von in dem Fluid in jeweiligen Fluidbereichen mitgeführten Partikeln reflektiert wird, mit mindestens einer für den jeweiligen Fluidbereich charakteristischen zweiten Frequenz f2, die gegenüber der Frequenz f1 um eine jeweilige Frequenzverschiebung Δf verschobenen ist, in einem Ultraschallempfänger;
c) Erfassen der lokalen Wandschubspannung in mindestens einem die Wand berührenden Bereich des Fluids;
d) Berechnen der mindestens einen Frequenzverschiebung Δf unter Verwendung der mindestens einen ersten Frequenz f1 und der mindestens einen zweiten Frequenz f2;
e) Zuordnen der jeweiligen Frequenzverschiebung Δf einem jeweiligen Fluidbereich unter Verwendung der jeweiligen Laufzeit des Ultraschallsignals zwischen dem Zeitpunkt des Verlassens des Ultraschallsenders und dem Zeitpunkt des Empfangs durch den Ultraschallempfänger;
f) Berechnen der Fluidgeschwindigkeit des jeweiligen Fluidbereichs, in dem die reflektierenden Partikel mitgeführt werden, unter Verwendung der jeweiligen Frequenzverschiebung;
g) Berechnen rheologischer Parameter des Fluids unter Verwendung der in dem mindestens einen lokalen Wandbereich erfassten Wandschubspannung des Fluids und der berechneten Fluidgeschwindigkeit der jeweiligen lokalen Fluidbereiche des strömenden Fluids.

Die erfindungsgemässe Anordnung zum Bestimmen der rheologischen Parameter des strömenden Fluids unter Verwendung des erfindungsgemässen Verfahrens weist auf:
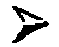 mindestens einen Wandbereich, der ein in der Vorrichtung strömendes Fluid zumindest in Teilbereichen der Fluidgrenzfläche berührt und begrenzt;
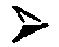 einen Ultraschallsender zum Einstrahlen eines Ultraschallsignals mit mindestens einer vorgegebenen Frequenz f1 unter einem von 90° verschiedenen Winkel Θ zur Strömungsrichtung eines in der Vorrichtung strömenden Fluids;
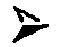 einen Ultraschallempfänger zum Empfangen eines Ultraschallsignals mit mindestens einer Frequenz f2, die gegenüber der Frequenz f1 um eine Frequenzverschiebung Δf verschobenen sein kann;
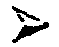 mindestens einen Schubspannungssensor zum Erfassen einer Wandschubspannung in mindestens einem die Wand berührenden Bereich des Fluids;
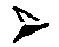 eine Rechen- und Verarbeitungseinheit zum Berechnen von Frequenzdifferenzen und zum Zuordnen einer bestimmten Frequenzdifferenz zu einem jeweiligen Fluidbereich unter Verwendung einer jeweiligen Zeitdifferenz zwischen Aussendung und Empfang eines Ultraschallsignals; zum Berechnen der Fluidgeschwindigkeit eines jeweiligen Fluidbereichs unter Verwendung der jeweiligen Frequenzverschiebung; und zum Berechnen rheologischer Parameter des Fluids unter Verwendung der erfassten Wandschubspannung des Fluids und der berechneten Fluidgeschwindigkeit der jeweiligen Fluidbereiche des strömenden Fluids.

Durch das Erfassen der lokalen Wandschubspannung in Schritt c), d.h. die Durchführung einer einzigen Schubspannungsmessung im Bereich der Grenzschicht des strömenden Fluids, werden die beiden Druckmessungen des Stands der Technik vermieden. Somit kann der Platzbedarf und der Verkabelungsaufwand der Messanordnung verringert und auch das Verfahren vereinfacht werden.

Da bei dem erfindungsgemässen Verfahren lediglich verlangt wird, dass die Fluidströmung zumindest in Teilbereichen von einer das Fluid berührenden Wand begrenzt wird, lässt sich das erfindungsgemässe Verfahren auch auf Fluidströmungen in einem teilweise offenen Kanal anwenden, wie z.B. bei einer durch die Schwerkraft angetriebenen Fluidströmung in einer geneigten Rinne oder einer Fluidströmung zwischen dem Zylindermantel des Rotors und des Stators z.B. in einem Rotationsrheometer. Diese Anwendungen werden zusätzlich durch die kompakte Messanordnung des erfindungsgemässen Verfahrens begünstigt. Es reicht vollkommen aus, wenn in einem lokalen Bereich, in dem sich der Ultraschallsender, der Ultraschallempfänger oder ggf. ein Ultraschall-Senderempfänger und der Schubspannungssensor befinden, eine Untersuchung des Verhaltens des strömenden Fluids (Fluidgeschwindigkeiten in lokalen Teilbereichen) unter der Einwirkung äusserer Einflüsse auf das Fluid (Schubwirkung z.B. durch Druckunterschied oder Massenkräfte; Schleppwirkung eines an einer bewegten Wand haftenden oder an ihr mit einem Schlupf gleitenden Fluids) durchgeführt wird. Das Verfahren eignet sich somit für die Untersuchung von Schub- und Schlepp-Scherströmungen sowie für kombinierte Schub/Schlepp-Scherströmungen. Aber auch turbulente Strömungen lassen sich untersuchen.

Bei Scherströmungen, die durch eine derartige Wand-Schleppwirkung in Gang gehalten werden, wie z.B. in dem Rotationsrheometer des vorhergehenden Absatzes, ist es sogar unmöglich, das UVP-PD-Verfahren des Stands der Technik anzuwenden, da man zwar Fluidgeschwindigkeiten mittels UVP bestimmen, jedoch kein Druckgefälle entlang der Strömungsrichtung bestimmen kann.

Hingegen ermöglicht das erfindungsgemässe Verfahren zusammen mit der erfindungsgemässen Anordnung aufgrund der lokalen, im Extremfall sogar punktuellen Messung der Wandschubspannung im Grenzschichtbereich des Fluids die Anwendung von UVP sowohl bei reinen Schlepp-Scherströmungen, gemischt angetriebenen Schlepp/Schub-Scherströmungen, insbesondere auch bei Rohrströmungen mit innerem Pfropfen, und natürlich bei reinen Schub-Scherströmungen. Es können also beliebige experimentelle "Randbedingungen" gewählt werden. Dies eröffnet dann auch neue Möglichkeiten bei der Parametrisierung der verschiedensten Strömungen und der Zuordnung zwischen solchen Parametern und kontinuumsmechanischen oder mikroskopischen, teilchenbasierten Modellen.

Das ausgesendete Ultraschallsignal kann ein Signal mit mehreren diskreten ersten Frequenzen (f1, f1', f1", ...) sein, und das empfangene Ultraschallsignal kann mindestens ein zweites Signal mit jeweils mehreren diskreten zweiten Frequenzen (f2, f2', f2", ...) sein, die gegenüber den jeweiligen ersten Frequenzen (f1, f1', f1", ...) jeweils um eine für den jeweiligen Fluidbereich charakteristische Frequenzverschiebung Δf verschobenen sind. Dies ermöglicht die Bestimmung der für einen Fluidbereich charakteristischen Fluidgeschwindigkeit aufgrund mehrerer Differenzbildungen, für die zumindest in erster Näherung f2-f1 = f2'-f1' = f2"-f1"=... = Δf gilt. Vorzugsweise wird das arithmetische Mittel der einzelnen Differenzen gebildet, um einen verlässlichen Wert für Δf und somit für die jeweilige Fluidgeschwindigkeit eines der Fluidbereiche zu erhalten.

Das ausgesendete Ultraschallsignal kann auch ein Signal mit einem ersten Frequenzspektrum (FS1) sein, und das empfangene Ultraschallsignal kann mindestens ein zweites Signal mit jeweils einem zweiten Frequenzspektrum (FS2) sein, das gegenüber dem ersten Frequenzspektrum (FS1) jeweils um eine für den jeweiligen Fluidbereich charakteristische Frequenzverschiebung Δf verschobenen ist. Auch hier können Frequenzverschiebungen an mehreren Stellen der beiden Frequenzspektren zur gemittelten Bestimmung des Wertes Δf und somit für die Bestimmung der jeweiligen Fluidgeschwindigkeit eines der Fiuidbereiche verwendet werden.

Vorzugsweise verwendet man für das ausgesendete und somit auch für das empfangene Ultraschallsignal jeweils gepulste Signale. Dies erleichtert in Schritt e) des erfindungsgemässen Verfahrens das Zuordnen der jeweiligen Frequenzverschiebung Δf und eines jeweiligen Fluidbereichs unter Verwendung der jeweiligen Laufzeit des Ultraschallsignals zwischen dem Zeitpunkt des Verlassens des Ultraschallsenders und dem Zeitpunkt des Empfangs durch den Ultraschallempfänger. Insbesondere weisen die gepulsten Signale dabei jeweils eine konstante Trägerfrequenz auf.

Das ausgesendete und das empfangene Ultraschallsignal können aber auch jeweils kontinuierliche Signale sein. Insbesondere bei der Verwendung der weiter oben beschriebenen Frequenzspektren FS1 und FS2 ist dies vorteilhaft.

Zweckmässigerweise erfolgt die Erfassung der Wandschubspannung in nur einem einzigen die Wand berührenden Bereich des Fluids. Dies ermöglicht eine besonders kompakte Realisierung des erfindungsgemässen Verfahrens.

Ebenfalls zweckmässigerweise erfolgen das Aussenden des in das Fluid eingestrahlten Ultraschallsignals und das Empfangen des reflektierten Ultraschallsignals an demselben Ort, z.B. mittels eines Ultraschall-Senderempfängers.
Vorzugsweise wird aus den in Schritt f) berechneten Fluidgeschwindigkeiten der Fluidbereiche des Fluids ein lokales Geschwindigkeitsprofil quer zur Strömungsrichtung erstellt, wobei insbesondere aus dem in Schritt f) berechneten lokalen Geschwindigkeitsprofil und der in Schritt c) erfassten lokalen Wandschubspannung in mindestens einem die Wand berührenden Bereich des Fluids die Viskositätsfunktion (Scherviskosität) des Fluids bestimmt wird.

Bei dem erfindungsgemässen Verfahren erfolgt vorzugsweise die Anpassung eines passenden Modells durch iteratives Anpassen eines modellbasierten theoretischen Geschwindigkeitsprofils an ein gemessenes Geschwindigkeitsprofil. Aus dem angepassten theoretischen Geschwindigkeitsprofil lassen sich dann diverse rheologische Parameter ablesen.

Vorzugsweise werden die gemessenen Geschwindigkeitsprofile vor der Anpassung behandelt, wobei insbesondere eine zeitliche Mittelung der gemessenen Geschwindigkeitsprofile erfolgt. Dadurch erhält man zuverlässigere Geschwindigkeitsprofile für die anschliessende Anpassung der Modelle.

Vorzugsweise werden von den bestimmten Wandschubspannungen und/oder von den bestimmten Geschwindigkeitsprofilen jeweils eine statistische Schwankungsgrösse, insbesondere die Standardabweichung, bestimmt und mit einem vorgegebenen Grenzwert für die Schwankungsgrösse verglichen. Vorzugsweise wird dieser Vergleich als Grundlage für die Auswahl zuverlässiger Messdaten verwendet.

Die Auswahl eines passenden Modells kann durch Überprüfung der in dem Modell verwendeten Randbedingungen erfolgen. So kann z.B. angenommen werden, dass die Geschwindigkeit des Fluids an der Wand Null ist, d.h. dass Wandhaftung vorliegt. Diese Annahme kann je nach erfolgreicher oder nicht erfolgreicher Kurvenanpassung beibehalten oder verworfen werden. Ähnlich kann mit der Annahme, dass die Geschwindigkeit des Fluids an der Wand von Null verschieden ist, vorgegangen werden.

Eine Überprüfung der Randbedingungen kann vorteilhaft auch durch Zählen vergeblicher Iterationsschritte bei der versuchten Anpassung eines Modells erfolgen, wobei insbesondere beim Überschreiten einer vorgegebenen Anzahl von Iterationsschritten ein anderes Modell mit anderen Parametern und/oder anderen Randbedingungen gewählt wird.

Die verwendeten Modelle werden vorzugsweise aus der folgenden Gruppe von Modellen ausgewählt:
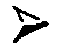 Potenzgesetz-Modell
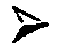 Herschel-Bulkley-Modell
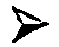 Cross-Modell.

Es können auch andere rheologische Modelle verwendet werden.

Die verwendeten Randbedingungen werden vorzugsweise aus der folgenden Gruppe von Randbedingungen ausgewählt:
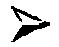 Fluidgeschwindigkeit an der Wand ist Null bzw. Vorliegen von Wandhaftung
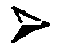 Fluidgeschwindigkeit an der Wand ist nicht Null bzw. Vorliegen von Wandgleitung
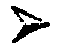 Fliessgrenze in einem Bereich der Fluidströmung unterschritten bzw. Pfropfen in der Strömung vorhanden
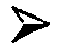 Fliessgrenze in keinem Bereich der Fluidströmung unterschritten bzw. kein Pfropfen in der Strömung vorhanden
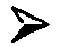 Strömungszustand: laminar
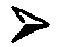 Strömungszustand: turbulent.

Eine Beschreibung der verwendeten Modelle und Randbedingungen findet sich in "Ultrasound Doppler Based In-Line Rheometry of Highly Concentrated Suspensions" von B. Ouriev, Diss. ETH Nr. 13523, Zürich 2000 oder in "Rheological study of concentrated suspensions in pressure-driven shear flow using a novel in-line ultrasound Doppler method" von B. Ouriev und E.J. Windhab, Experiments in Fluids 32 (2002).

Zumindest ein Teil der bestimmten rheologischen Parameter des Fluids können auch mit Werten dieser Parameter verglichen werden, die auf andere Art bestimmt wurden. Dies ermöglicht eine zusätzliche Absicherung der Ergebnisse für die rheologischen Parameter. Vorzugsweise erfolgt die andersartige Bestimmung der rheologischen Parameter durch Messung der Viskosität in einem Rotationsrheometer und/oder in einem Kapillar-Rheometer.

Zweckmässigerweise wird die statistische Schwankungsgrösse, insbesondere die Standardabweichung, für die erfassten Geschwindigkeitssignale jedes Geschwindigkeitskanals (= Ort am Geschwindigkeitsprofil) und/oder für die erfassten Drucksignale jeder Druckmessstelle bestimmt. Diese Information kann unter anderem verwendet werden, um zu unterscheiden, ob sich das strömende Fluid im turbulenten oder im laminaren Strömungszustand befindet.

Vorzugsweise weist die erfindungsgemässe Anordnung nur einen Schubspannungssensor auf, der in dem mindestens einen Wandbereich angeordnet ist und zum Erfassen einer Wandschubspannung in mindestens einem die Wand berührenden Bereich des Fluids dient.

Bei einer besonders bevorzugten, da besonders kompakten Ausführung der erfindungsgemässen Anordnung sind der Schubspannungssensor, der Ultraschallsender und der Ultraschallempfänger bzw. der Ultraschall-Senderempfänger in dem mindestens einen Wandbereich angeordnet.

Bei einer weiteren bevorzugten Ausführung kann die erfindungsgemässe Anordnung mindestens einen ersten Wandbereich und einen zweiten Wandbereich aufweisen, zwischen denen jeweils ein in der Vorrichtung strömendes Fluid fliessen kann und die zumindest in Teilbereichen die Fluidgrenzfläche berühren und begrenzen, wobei vorzugsweise in dem ersten Wandbereich ein Ultraschallsender und in dem zweiten Wandbereich ein Ultraschallempfänger angeordnet ist. Dies ermöglicht das Arbeiten mit Ultraschallwellen, die an den im Fluid mitgeführten Partikeln zwar nicht mit einer Richtungsumkehr von 180°, sondern mit einer nur relativ kleinen Richtungsänderung reflektiert/gestreut werden. Dies garantiert für alle am gegenüberliegenden Ultraschallsensor empfangenen Ultraschallwellen eine näherungsweise gleich lange Laufzeit bzw. einen näherungsweise gleich langen Weg im strömenden Medium. Auf diese Weise werden praktisch alle zwischen dem Ultraschallsensor und dem Ultraschallempfänger über Partikel in verschiedenen dazwischen liegenden Fluidbereichen reflektierte/gestreute Ultraschallwellen näherungsweise gleich stark durch das durchquerte fliessende Medium gedämpft. Allerdings muss darauf geachtet werden, dass mit zunehmend kleiner werdendem Ablenkungswinkel der an den bewegten Partikeln reflektierten/gestreuten Schallwellen zwar eine Vergleichmässigung der Absorption der empfangenen Schallwellen erfolgt, wobei dies jedoch einerseits mit einer entsprechend verringerten Auflösung bei der Ortung der jeweiligen reflektierenden Fluidbereiche bei Schritt e) des erfindungsgemässen Verfahrens, insbesondere unter Verwendung gepulster Signale, und andererseits durch kleinere Frequenzverschiebungen erkauft werden muss. Mit zunehmenden Strömungsgeschwindigkeiten in dem Fluid nehmen jedoch auch die Frequenzverschiebungen zu, so dass dann zumindest die Auswirkung der kleinen Ablenkungswinkel kompensiert wird.

Vorzugsweise ist in dem ersten Wandbereich ein erster Ultraschall-Senderempfänger und in dem zweiten Wandbereich ein zweiter Ultraschall-Senderempfänger angeordnet. Dadurch kann die Strömung "von links nach rechts" und gleichzeitig "von rechts nach links" mit Ultraschallwellen durchstrahlt werden. Auf diese Weise können "linken" und "rechten" Messergebnisse gemittelt werden. Dies ist besonders vorteilhaft, wenn man vor die Frage gestellt ist, ob gewisse Asymmetrien in der experimentell bestimmten Geschwindigkeitsverteilung quer zur Strömungsrichtung nur messtechnische Artefakte oder wirkliche Asymmetrien der realen Geschwindigkeitsverteilung im Fluid sind. Derartige Artefakte, die eine Asymmetrie der Geschwindigkeitsverteilung vortäuschen, können dann in der Regel durch Mittelung der beiden artefaktbehafteten Verteilungen korrigiert werden. Wenn das gemittelte Ergebnis dann immer noch asymmetrisch ist, deutet dies dann auf eine tatsächliche Asymmetrie in der Strömung hin.

Vorzugsweise sind auch hier in dem ersten Wandbereich ein erster Ultraschall-Senderempfänger und ein erster Schubspannungssensor angeordnet und in dem zweiten Wandbereich ein zweiter Ultraschall-Senderempfänger und ein zweiter Schubspannungssensor angeordnet.

Der Wandbereich der Anordnung kann die Innenwand eines Rohr- bzw. Kanalabschnitts sein, der in eine Rohrleitung bzw. einen Kanal für den Fluidtransport integrierbar ist, wobei vorzugsweise der Ultraschall-Senderempfäriger und der Schubspannungssensor in einer kompakten Ultraschall-Senderempfänger/Schubspannungssensor-Messwandlereinheit integriert sind. Zusätzlich kann auch noch ein Drucksensor in der Anordnung enthalten sein. Dies ermöglicht eine "sondenartige" Ausbildung nicht nur jedes einzelnen Elements der Anordnung, sondern der gesamten erfindungsgemässen Anordnung, wodurch eine noch bessere "Prozess-Zugänglichkeit" des erfindungsgemässen Verfahrens gewährleistet wird.

Weitere Vorteile, Merkmale und Anwendungsmöglichkeiten der Erfindung ergeben sich aus der nun folgenden Beschreibung nicht einschränkend aufzufassender bevorzugter Ausführungsbeispiele, wobei:
- Fig. 1: eine Messanordnung gemäss dem Stand der Technik zeigt;
- Fig. 2: eine Messanordnung gemäss der Erfindung zeigt; und
- Fig. 3 bis 7: die erfindungsgemässe Vorgehensweise zur Verarbeitung und Auswertung der durch die Messanordnung in Fig. 1 gewonnenen Messwerte schematisch zeigen.

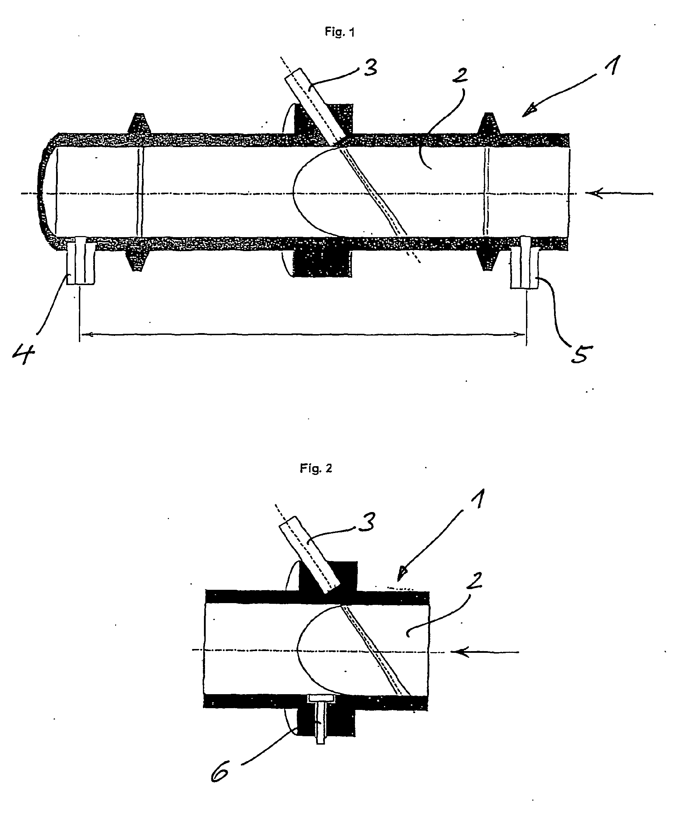

In Fig. 1 ist ein Rohrabschnitt 1 gezeigt, in dem ein Fluid 2 strömt. Die Messanordnung in Fig. 1 umfasst einen Ultraschall-Senderempfängei- 3 sowie einen Drucksensor 4 stromab und einen Drucksensor 5 stromauf von dem Ultraschall-Senderempfänger 3.

Gemäss dem Ultraschall-Doppler-Verfahren (UVP-Verfahren) sendet ein Ultraschall-Senderempfänger 3 eine schmale Ultraschallwelle US mit einer Frequenz f1 (praktisch ebene Welle bzw. paralleles Strahlenbündel) in das strömende Fluid 2 quer zur Fluid-Strömungsrichtung. Die Ultraschallwelle US wird von bewegten Teilchen, die in dem strömenden Fluid 2 mitgeführt werden, reflektiert bzw. gestreut. Der in den Ultraschall-Senderempfänger 3 zurück reflektierte bzw. gestreute Teil der Ultraschallwelle US hat aufgrund der Bewegung der Teilchen eine verschobene Frequenz f2 (Doppler-Verschiebung). Diese Frequenzverschiebung gibt Auskunft über die Geschwindigkeit der Teilchen bzw. des Fluids in einem bestimmten Fluidvolumen. Die Zuordnung der erfassten unterschiedlichen Frequenzverschiebungen zu den Orten im Fluid, an denen die frequenzverschiebende Reflexion bzw. Streuung stattfindet, erfolgt über eine Laufzeitmessung zwischen dem Zeitpunkt des Aussendens und des Empfangens der Ultraschallwelle am Ultraschall-Senderempfänger 3. Vorzugsweise verwendet man deshalb gepulste Ultraschallwellen. Je kleiner die zeitlichen und damit auch örtlichen Abstände der nacheinander empfangenen reflektierten Ultraschallimpulse sind, desto grösser ist die örtliche Auflösung und die Anzahl der erfassten Frequenzverschiebungen. Auf diese Weise lässt sich das Geschwindigkeitsprofil bestimmen.

Mit den beiden Drucksensoren 4 und 5 wird ein erster statischer Druck P1 stromab und ein zweiter statischer Druck P2 stromauf von dem durch die Ultraschallwellen durchquerten Bereich der Fluidströmung gemessen. Hieraus wird dann die Wandschubspannung im Fluid ermittelt.

Durch die Kombination der Fluid-Geschwindigkeitsverteilung ("Reaktion des Fluids") quer zur Strömungsrichtung und der Fluid-Wandschubspannung ("äussere Einwirkung auf das Fluid") kann dann die Viskositätsfunktion (Scherviskosität) des Fluids bestimmt werden.

Zusätzlich zu der Bestimmung der Fluid-Wandschubspannung und der Bestimmung des Fluid-Geschwindigkeitsprofils werden erfindungsgemäss ein passendes Modell für die Viskositätsfunktion (Scherviskosität) sowie passende Randbedingungen für das strömende Fluid ausgewählt.

In Fig. 2 ist ebenfalls ein Rohrabschnitt 1 gezeigt, in dem ein Fluid 2 strömt. Die Messanordnung in Fig. 2 umfasst einen Ultraschall-Senderempfänger 3 sowie einen Schubspannungssensor 6 gegenüber von dem Ultraschall-Senderempfänger 3 in dem Bereich, in dem das Geschwindigkeitsprofil erfasst werden soll.

Gemäss dem Ultraschall-Doppler-Verfahren (UVP-Verfahren) wird auch hier unter Verwendung des Ultraschall-Senderempfängers 3 auf dieselbe Weise wie schon in Fig. 1 beschrieben das Geschwindigkeitsprofil bestimmt.

Anstelle der beiden Drucksensoren 4 und 5 wird hier jedoch ein Schubspannungssensor 6 verwendet, der eine lokale Bestimmung der Wandschubspannung im Fluid ermöglicht. Hier wird die Wandschubspannung direkt und in dem Bereich ermittelt, in dem auch das Geschwindigkeitsprofil durch UVP ermittelt wird. Während beim Stand der Technik (Fig.1) eine "globale" indirekte Erfassung der Wandschubspannung erfolgt, bei der zwangsläufig eine Mittelung über den gesamten Abstand zwischen den beiden Drucksensoren stattfindet, erfolgt bei dem erfindungsgemässen Verfahren unter Verwendung der erfindungsgemässen Anordnung vielmehr eine "lokale" direkte Bestimmung der Wandschubspannung. Somit erfolgt letztendlich eine Zuordnung zwischen den tatsächlichen Werten der Wandschubspannung (Randbedingung) am Ort des erfassten Geschwindigkeitsprofils und dem Geschwindigkeitsprofil, das zu dieser Randbedingung gehört.

Auch hier kann dann durch die Kombination der Fluid-Geschwindigkeitsverteilung ("Reaktion des Fluids") quer zur Strömungsrichtung und der Fluid-Wandschubspannung ("äussere Einwirkung auf das Fluid") die Viskositätsfunktion (Scherviskosität) des Fluids bestimmt werden.

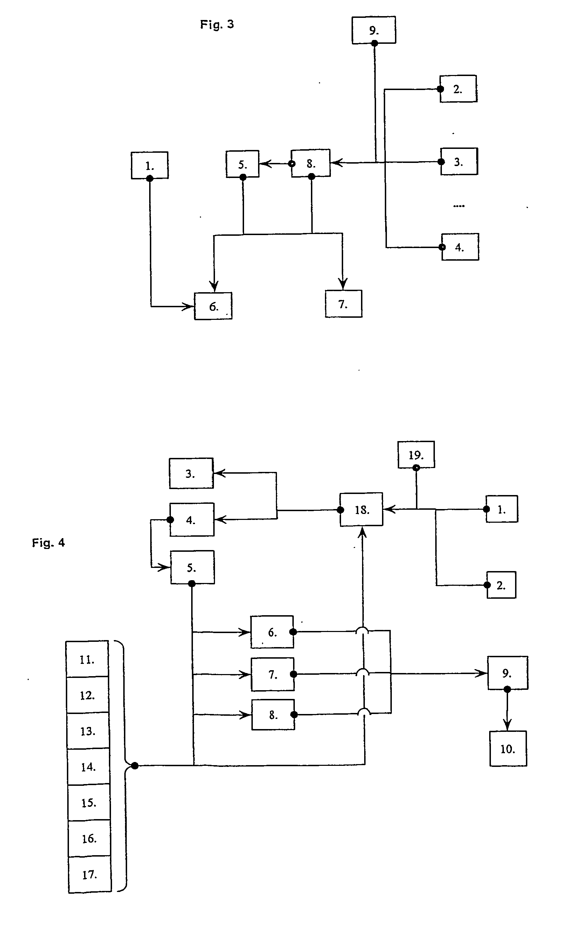

Fig. 3 zeigt schematisch die Vorgehensweise zur Auswertung der gemessenen Schubspannungsinformation für die Bestimmung der Wandschubspannung in dem Fluid. Bei 1) wird die Geometrie des Strömungskanals eingegeben. Bei 2) wird die Schubspannung S eingegeben, und bei 3) und 4) werden ggf. weitere Schubspannungen eingegeben. Es können (optional!) bis zu N verschiedene Schubspannungen S1 bis SN eingegeben werden. Der eingegebene Schubspannungswert wird mittels einer bei 9) erfolgenden Triggerung in einem Filter bei 8) gefiltert, um eine Signalglättung zu erzielen. Bei 5) wird dann eine Wandschubspannung ausgegeben. Bei 6) wird die Wandschubspannung-Verteilung bestimmt, und bei 7) werden ggf. und in der Regel nur an einem Ort gemessene Druckschwankungen bestimmt.

Fig. 4 zeigt schematisch die Vorgehensweise zur Behandlung der unbearbeiteten "rohen" Geschwindigkeitsprofile vor der Kurvenanpassung. Bei 1) werden gemessene unbearbeitete Geschwindigkeitsprofile eingegeben. Bei 2) wird die für das untersuchte Fluid und die vorgegebene Schallfrequenz gemessene Fluid-Schallgeschwindigkeit eingegeben. Die Werte der eingegebenen Geschwindigkeitsprofile werden über eine bei 19) erfolgende Triggerung bei 18) einer zeitlichen Mittelung unterzogen, um bei 3) gemittelte Geschwindigkeitsprofile zu erhalten. Ausserdem werden bei 18) die beim Ultraschall-Doppler-Verfahren verwendeten Parameter eingegeben, und zwar bei 11) der Doppler-Winkel, bei 12) akustische Information, bei 13) die Anfangstiefe, bei 14) der Kanalabstand, bei 15) das Messfenster, bei 16) die Impuls-Repetitionsfrequenz und bei 17) die verwendete Strahlgeometrie. Bei 4) wird die Standardabweichung für jeden Geschwindigkeitskanal des Geschwindigkeitsprofils bestimmt, die dann bei 5) mit einem vorbestimmten Grenzwert verglichen wird. Hieraus werden dann bei 6), 7) und 8) jeweils die wirkliche Anfangstiefe, die wirkliche Eindringungstiefe und der wirkliche Kanalabstand bestimmt. Ausgehend von diesen drei Werten werden dann bei 9) zuverlässige Geschwindigkeitsdaten für die weiteren Berechnungen ausgewählt, die schliesslich bei 10) für die Kurvenanpassung vorbereitet werden.

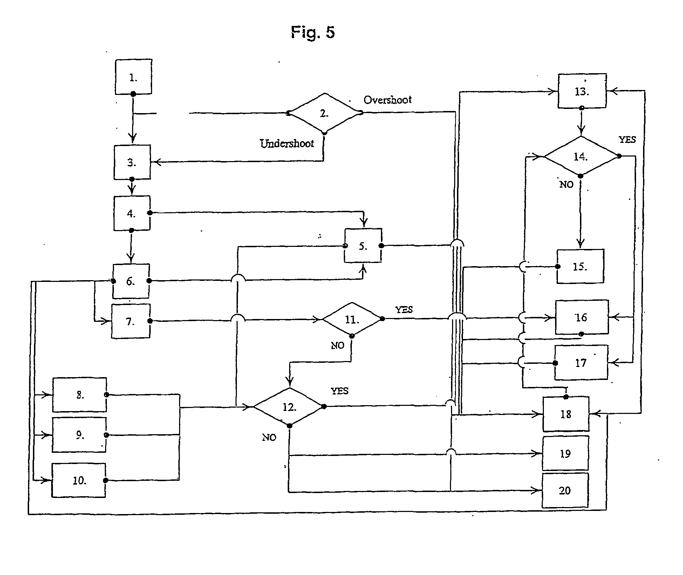

Fig. 5 zeigt schematisch die Vorgehensweise zur Wahl eines passenden Modells, zur Auswahl zuverlässiger Daten und zur Überprüfung der Randbedingungen für das strömende Fluid. Bei 1) werden die Geschwindigkeitsdaten für die Kurvenanpassung vorbereitet. Bei 2) erfolgt ein Vergleich der ermittelten Standardabweichung SMD mit einem vorbestimmten Grenzwert SMDL der Standardabweichung.

Wenn SMD kleiner als SMDL ist, wird bei 3) entschieden, dass SMD für das Anpassen der Daten (Kurvenanpassung) verwendet wird. In diesem Fall wird bei 4) über die Methode der kleinsten Fehlerquadrate eine Kurvenanpassung durchgeführt. Dies wird bei 5) zur Überwachung der axialen Symmetrie des Strömungsprofils und bei 6) Bestimmung der maximalen Strömungsgeschwindigkeit verwendet. Wenn SMD grösser als SMDL ist, wird bei 18) die Lösung des Randwertproblems eingeleitet und bei 20) ein Warnsignal ausgegeben. Das Warnsignal zeigt an, dass die Randbedingungen nicht erfüllt sind.

Bei 7) wird geschaut, ob die Wandgeschwindigkeit Null ist. Wenn bei 11) dann bejaht wird, dass die Geschwindigkeit an der Wand von Null verschieden ist, wird bei 16) das Potenzgesetz-Modell mit der Annahme eines Wandgleiteffekts geladen. Wenn hingegen bei 11) verneint wird, dass die Geschwindigkeit an der Wand von Null verschieden ist, wird diese Aussage (Geschwindigkeit an der Wand ist Null) als Bedingung an 12) herangeführt. Bei 8) wird geschaut, ob die maximale Strömungsgeschwindigkeit konstant ist, bei 9) wird geschaut, ob die Druckschwankungen niedrig sind, d.h., ob SMD klein ist und bei 10) wird geschaut, ob die Temperaturdifferenz entlang des Strömungskanals (Rohr) klein oder Null ist.

Wenn bei 12) alle der Bedingungen 8), 9) und 10) bejaht bzw. erfüllt werden und wenn die Geschwindigkeit an der Wand Null ist, wird bei 13) das Potenzgesetz-Modell als Teil des Lösungsansatzes von 18) geladen. Wenn bei 14) dann bestimmt wird, dass der Strömungsindex grösser als ein gegebener Grenzwert ist, wird bei 16) das Potenzgesetz-Modell mit der Annahme eines Wandgleiteffekts geladen, und bei 17) wird das Modell mit der Annahme einer Fliessgrenze geladen. Wenn bei 14) hingegen bestimmt wird, dass der Strömungsindex kleiner als ein gegebener Wert ist, wird bei 15) das Potenzgesetz-Modell geladen. Wenn hingegen bei 12) alle der Bedingungen 8), 9) und 10) verneint werden bzw. nicht erfüllt sind und wenn die Geschwindigkeit an der Wand von Null verschieden ist, wird bei 18) der Lösungsansatz mit dem Potenzgesetz-Modell eingeleitet zur Bestimmung des Strömungsindexes, bei 19) eine Wiederholung der Messung eingeleitet und bei 20) ein Warnsignal ausgegeben.

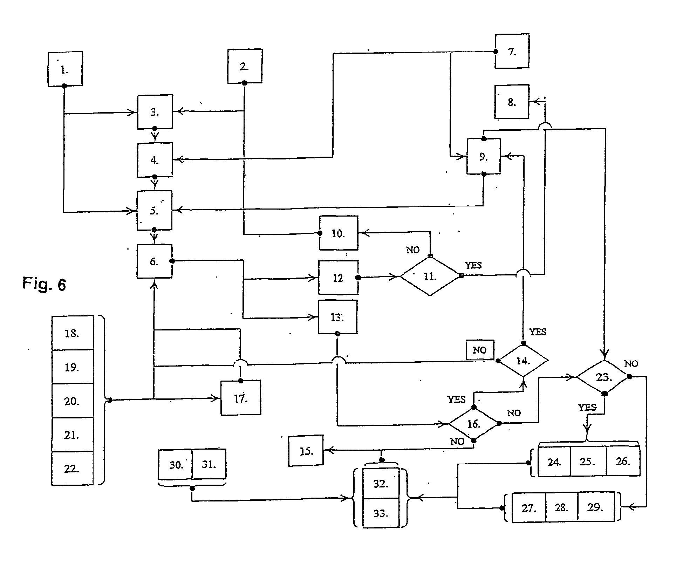

Fig. 6 zeigt schematisch die Vorgehensweise zur Lösung des Randwertproblems durch Kurvenanpassung und insbesondere die Berücksichtigung der Annahme der Wandgleitung bei der Kurvenanpassung.

Bei 1) geht man davon aus, dass die maximale Strömungsgeschwindigkeit konstant ist. Bei 2) sowie bei der ersten Iteration von 9) geht man davon aus, dass die Geschwindigkeit an der Wand Null ist. Bei 3) erfolgt mit der Information von 1) und 2) eine Anpassung unter Verwendung des Potenzgesetz-Modells. Bei 4) wird dann der Strömungsindex n des Potenzgesetz-Modells von 7) auf n=1 gesetzt. Unter dieser Voraussetzung sowie der Voraussetzung von 1) und der von 9) stammenden Voraussetzung, dass die Gleitgeschwindigkeit an der Wand Null ist, wird bei 5) das theoretische Geschwindigkeitsprofil für n=1 berechnet.

Bei 6) wird dann eine Anpassung der eingegebenen Daten mit der Methode der kleinsten Fehlerquadrate durchgeführt. Die Daten hierfür werden bei 18), 19), 20), 21) und 22) eingegeben, und zwar bei 18) die wirkliche Anfangstiefe, bei 19) die wirkliche Eindringungstiefe, bei 20) der wirkliche Kanalabstand, bei 21) das Überschreiten der Standardabweichungsgrenze durch die Standardabweichung und bei 22) Information über die axiale Symmetrie des Strömungsprofils von der Steuerung der axialen Symmetrie. Bei 17) wird aus den bei 18) bis 22) eingegebenen Daten ein Datenbereich ausgewählt. Bei 12) und 13) werden aus der bei 6) erfolgten Anpassung der Strömungsindex bzw. Kriterien der Anpassungsqualität abgelesen.

Bei 11) wird entschieden, ob der bei 12) abgelesene Strömungsindex unter einem niedrigsten Grenzwert liegt oder nicht. Wenn dies nicht der Fall ist, wird bei 10) der Strömungsindex inkrementiert, um bei 3) erneut mit dem Potenzgesetz-Modell verwendet zu werden. Man geht dann iterativ vor, wobei die Schritte 10), 3), 4), 5), 6), 12) und 13) mehrmals durchlaufen werden. Wenn jedoch bei 11) der andere Fall vorliegt, dass nämlich der Strömungsindex unter einem niedrigsten Grenzwert liegt, wird bei 8) die Lösung des Randwertproblems mit anderen Modellen eingeleitet.

Bei 7) geht man davon aus, dass das Fluid an der Wand gleitet, die Fluidgeschwindigkeit an der Wand also von Null verschieden ist. Diese Annahme wird bei 4) mit dem Potenzgesetz-Modell verwendet, um bei 5) wiederum ein entsprechendes theoretisches Profil zu berechnen. Die weitere Vorgehensweise bei der Iteration ist dann genauso wie im vorherigen Absatz.

Bei 16) wird entschieden, ob die bei 13) abgelesenen Kriterien der Anpassungsqualität vorgegebene Grenzwerte übersteigen oder nicht. Wenn dies der Fall ist, wird bei 14) abgefragt, ob die Anzahl der Iterationen eine vorgegebene Anzahl übersteigt oder nicht. Wenn dies der Fall ist, wird bei 9) in einem ersten Iterationsschritt die Gleitgeschwindigkeit an der Wand auf Null gesetzt, und man steigt bei 5) erneut in die Iteration ein. Ansonsten wir die Iteration fortgeführt. Die weitere Vorgehensweise bei der Iteration ist wieder dieselbe wie in den beiden vorhergehenden Absätzen. Wenn bei 16) entschieden wird, dass die Kriterien der Anpassung die vorgegebenen Grenzwerte nicht übersteigen, werden bei 15) die Argumente (z.B. Strömungsindex, Gleitgeschwindigkeit, steigen, werden bei 15) die Argumente (z.B. Strömungsindex, Gleitgeschwindigkeit, Radius des Pfropfens, etc.) ausgegeben, und man schreitet zu 23) fort.

Bei 23) wird abgefragt, ob die Gleitgeschwindigkeit an der Wand Null ist oder nicht. Wenn sie Null ist, werden bei 24), 25) und 26) aus der Anpassung an das Geschwindigkeitsprofil jeweils die volumetrische Strömungsgeschwindigkeit, die Wandschergeschwindigkeit und die Schergeschwindigkeitsverteilung berechnet. Wenn die Gleitgeschwindigkeit an der Wand nicht Null ist, werden bei 27), 28) und 29) aus der Anpassung an das Geschwindigkeitsprofil unter Annahme von Wandgleitung in analoger Weise jeweils die volumetrische Strömungsgeschwindigkeit, die Wandschergeschwindigkeit und die Schergeschwindigkeitsverteilung berechnet. Aus den bei 24) bis 26) oder bei 27) bis 29) berechneten Grössen werden dann bei 32) die Wand-Scherviskosität und bei 33) die Scherviskositätsfunktion berechnet (z.B. deren Verteilung entlang einer zur Strömung quer verlaufenden Richtung).

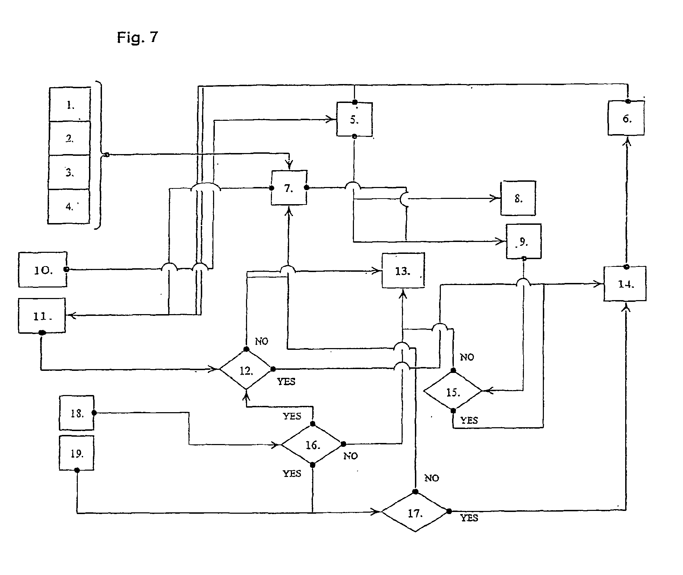

Fig. 7 zeigt schematisch die Vorgehensweise zur Bestimmung des Strömungszustands. Bei 1), 2), 3) und 4) geht man jeweils vom Potenzgesetz-Modell, vom Herschel-Bulkley-Modell, vom Cross-Model bzw. von anderen Modellen aus. Hieraus erfolgt bei 7) wiederum die Lösung des Randwertproblems, und die rheologischen Grössen werden bei 9) ausgegeben.

Bei 15) wird entschieden, ob die aus der Scherviskositätsverteilung berechnete Scherviskosität kleiner als ein vom Benutzer eingegebener vorgegebener Viskositäts-Grenzwert ist, der durch off-line und/oder on-line durchgeführte Referenzmessungen z.B. unter Verwendung eines Rotationsrheometers, eines Kapillarrheometers oder irgendeines anderen Rheometers verwendet wurde. Wenn die Scherviskosität kleiner als der Grenzwert ist, wird entschieden, dass ein turbulenter Strömungszustand gemäss 14) vorliegt. Wenn die Scherviskosität grösser oder gleich wie der Grenzwert ist, wird entschieden, dass ein laminarer Strömungszustand gemäss 13) vorliegt.

Bei 6) wird ein Lösungsansatz für den turbulenten Strömungszustand verwendet. Dieser Lösungsansatz unterscheidet sich von dem Lösungsansatz beim laminaren Strömungszustand nur durch das Anpassungsmodell, das eine ähnliche Form hat, bei dem aber andere Werte für die Parameter, z.B. für den Strömungsindex, verwendet werden. Der "turbulente" Strömungsindex wird dann bei 6) berechnet und bei 11) verwendet.

Bei 12) wird entschieden, ob der Strömungsindex unter einem niedrigsten Grenzwert liegt oder nicht. Wenn der Strömungsindex darunter liegt, wird entschieden, dass ein turbulenter Strömungszustand gemäss 14) vorliegt. Wenn der Strömungsindex gleich gross oder grösser als der niedrigste Grenzwert ist und aufgrund einer Bewertung der Grössen SMD, Viskosität, Strömungsindex und maximale Geschwindigkeit wird entschieden, dass ein laminarer Strömungszustand gemäss 13) oder ein turbulenter Strömungszustand gemäss 14) vorliegt, und man verwendet bei 6) den Lösungsansatz für die turbulente Strömung.

Bei 10) geht man von der Annahme aus, dass Wandgleitung vorliegt. Bei 5) verwendet man den Lösungsansatz unter Berücksichtigung von Wandgleitung. Hieraus erhält man einen Wert für die Wandgleitung bei 8) sowie andere rheologische Parameter bei 9).

Bei 18) geht man von der Standardabweichung SMD für jeden Geschwindigkeitskanal aus. Bei 16) wird entschieden, ob die SMD einen maximalen Grenzwert übersteigt oder nicht. Wenn die SMD diesen maximalen Grenzwert übersteigt, wird bei 12) wiederum entschieden, ob der Strömungsindex kleiner als der niedrigste Grenzwert ist oder nicht. Wenn ja, liegt der turbulente Zustand gemäss 14) vor. Wenn nein, liegt der laminare Strömungszustand gemäss 13) vor.

Bei 19) geht man von der Standardabweichung SMD der laufenden n-ten Anpassung an das unverarbeitete "rohe" Drucksignal aus. Bei 17) wird entschieden, ob Druckschwankungen vorliegen oder nicht. Wenn Druckschwankungen vorliegen und wenn eine Beurteilung der Viskosität, des Strömungsindexes und der maximalen Geschwindigkeit es zulassen, wird entschieden, dass ein turbulenter Zustand gemäss 14) vorliegt, und man verwendet bei 6) den Lösungsansatz für die turbulente Strömung. Wenn keine Druckschwankungen vorliegen, wird für den laminaren Zustand entschieden, und man verwendet bei 7) den Lösungsansatz für die laminare Strömung.

Zusammenfassend kann gesagt werden, dass man im wesentlichen die folgenden Strömungsarten unterscheiden kann:
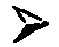 laminare Strömung mit Pfropfen (hochviskoses Material, z.B. stark konzentrierte Suspension)
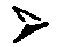 laminare Strömung ohne Pfropfen (sowohl mit Strömungsindex n > 1, d.h. dilatantes bzw. scherverdickendes Material, als auch mit Strömungsindex n < 1, d.h. strukturviskoses bzw. scherverdünnendes Material)
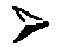 turbulente Strömung (niederviskoses Material, z.B. schwach konzentrierte Suspension).

Das ("geglättete") globale Strömungsprofil der turbulenten Strömung quer zur Rohrachse, bei dem die lokalen Geschwindigkeitsschwankungen herausgefiltert wurden, kann in Analogie zur hochviskosen Pfropfenströmung z.B. durch das Herschel-Bulkley-Modell beschrieben werden.

## Patentansprüche

1. Verfahren zum Bestimmen rheologischer Parameter eines strömenden Fluids, insbesondere einer Suspension oder Emulsion, wobei die Fluidströmung zumindest in Teilbereichen von einer das Fluid berührenden Wand begrenzt wird und wobei das Verfahren die folgenden Schritte aufweist:
a) Einstrahlen eines aus einem Ultraschallsender gesendeten Ultraschallsignals mit mindestens einer vorgegebenen ersten Frequenz f1 unter einem von 90° verschiedenen Winkel Θ zur Strömungsrichtung in die Fluidströmung;
b) Empfangen eines Ultraschallsignals, das von in dem Fluid in jeweiligen Fluidbereichen mitgeführten Partikeln reflektiert wird, mit mindestens einer für den jeweiligen Fluidbereich charakteristischen zweiten Frequenz f2, die gegenüber der Frequenz f1 um eine jeweilige Frequenzverschiebung Δf verschobenen ist, in einem Ultraschallempfänger;
c) Erfassen der lokalen Wandschubspannung in mindestens einem die Wand berührenden Bereich des Fluids;
d) Berechnen der mindestens einen Frequenzverschiebung Δf unter Verwendung der mindestens einen ersten Frequenz f1 und der mindestens einen zweiten Frequenz f2;
e) Zuordnen der jeweiligen Frequenzverschiebung Δf einem jeweiligen Fluidbereich unter Verwendung der jeweiligen Laufzeit des Ultraschallsignals zwischen dem Zeitpunkt des Verlassens des Ultraschallsenders und dem Zeitpunkt des Empfangs durch den Ultraschallempfänger;
f) Berechnen der Fluidgeschwindigkeit des jeweiligen Fluidbereichs, in dem die reflektierenden Partikel mitgeführt werden, unter Verwendung der jeweiligen Frequenzverschiebung;
g) Berechnen rheologischer Parameter des Fluids unter Verwendung der in dem mindestens einen lokalen Wandbereich erfassten Wandschubspannung des Fluids und der berechneten Fluidgeschwindigkeit der jeweiligen lokalen Fluidbereiche des strömenden Fluids.

2. Verfahren nach Anspruch 1, **dadurch gekennzeichnet, dass** das ausgesendete Ultraschallsignal ein Signal mit mehreren diskreten ersten Frequenzen (f1, f1', f1", ...) ist und das empfangene Ultraschallsignal mindestens ein zweites Signal mit jeweils mehreren diskreten zweiten Frequenzen (f2, f2', f2", ...) ist, die gegenüber den jeweiligen ersten Frequenzen (f1, f1', f1", ...) jeweils um eine für den jeweiligen Fluidbereich charakteristische Frequenzverschiebung Δf verschobenen sind.

3. Verfahren nach Anspruch 1, **dadurch gekennzeichnet, dass** das ausgesendete Ultraschallsignal ein Signal mit einem ersten Frequenzenspektrum (FS1) ist und das empfangene Ultraschallsignal mindestens ein zweites Signal mit jeweils einem zweiten Frequenzspektrum (FS2) ist, das gegenüber dem ersten Frequenzspektrum (FS1) jeweils um eine für den jeweiligen Fluidbereich charakteristische Frequenzverschiebung Δf verschobenen ist.

4. Verfahren nach einem der Ansprüche 1 bis 3, **dadurch gekennzeichnet, dass** das ausgesendete und das empfangene Ultraschallsignal jeweils gepulste Signale sind.

5. Verfahren nach Anspruch 4, **dadurch gekennzeichnet, dass** die gepulsten Signale jeweils eine konstante Trägerfrequenz aufweisen.

6. Verfahren nach einem der Ansprüche 1 bis 3, **dadurch gekennzeichnet, dass** das ausgesendete und das empfangene Ultraschallsignal jeweils kontinuierliche Signale sind.

7. Verfahren nach einem der Ansprüche 1 bis 6, **dadurch gekennzeichnet, dass** in Schritt c) die Erfassung der Wandschubspannung in nur einem die Wand berührenden Bereich des Fluids erfolgt.

8. Verfahren nach einem der Ansprüche 1 bis 7, **dadurch gekennzeichnet, dass** das Aussenden des in das Fluid eingestrahlten Ultraschallsignals und das Empfangen des reflektierten Ultraschallsignals an demselben Ort erfolgen.

9. Verfahren nach einem der Ansprüche 1 bis 8, **dadurch gekennzeichnet, dass** aus den in Schritt f) berechneten Fluidgeschwindigkeiten der Fluidbereiche des Fluids ein lokales Geschwindigkeitsprofil quer zur Strömungsrichtung erstellt wird.

10. Verfahren nach Anspruch 9, **dadurch gekennzeichnet, dass** aus dem in Schritt f) berechneten lokalen Geschwindigkeitsprofil und der in Schritt c) erfassten lokalen Wandschubspannung in mindestens einem die Wand berührenden Bereich des Fluids die Viskositätsfunktion (Scherviskosität) des Fluids bestimmt wird.

11. Verfahren nach einem der Ansprüche 1 bis 10, **dadurch gekennzeichnet, dass** die Anpassung eines passenden Modells durch iteratives Anpassen eines modellbasierten theoretischen Geschwindigkeitsprofils an ein gemessenes Geschwindigkeitsprofil erfolgt.

12. Verfahren nach Anspruch 11, **dadurch gekennzeichnet, dass** die gemessenen Geschwindigkeitsprofile vor der Anpassung behandelt werden.

13. Verfahren nach Anspruch 12, **dadurch gekennzeichnet, dass** die Behandlung eine zeitliche Mittelung der gemessenen Geschwindigkeitsprofile ist.

14. Verfahren nach einem der Ansprüche 1 bis 13, **dadurch gekennzeichnet, dass** von den gemessenen Wandschubspannungen und/oder von den bestimmten Geschwindigkeitsprofilen jeweils eine statistische Schwankungsgrösse, insbesondere die Standardabweichung, bestimmt und mit einem vorgegebenen Grenzwert für die Schwankungsgrösse verglichen wird.

15. Verfahren nach Anspruch 14, **dadurch gekennzeichnet, dass** der Vergleich als Grundlage für die Auswahl zuverlässiger Messdaten verwendet wird.

16. Verfahren nach einem der Ansprüche 1 bis 15, **dadurch gekennzeichnet, dass** die Auswahl eines passenden Modells durch Überprüfung der in dem Modell verwendeten Randbedingungen erfolgt.

17. Verfahren nach Anspruch 16, **dadurch gekennzeichnet, dass** die Überprüfung der Randbedingungen durch Zählen vergeblicher Iterationsschritte bei der versuchten Anpassung eines Modells erfolgt.

18. Verfahren nach Anspruch 17, **dadurch gekennzeichnet, dass** beim Überschreiten einer vorgegebenen Anzahl von Iterationsschritten ein anderes Modell mit anderen Parametern und/oder anderen Randbedingungen gewählt wird.

19. Verfahren nach einem der Ansprüche 1 bis 18, **dadurch gekennzeichnet, dass** die verwendeten Modelle aus der folgenden Gruppe von Modellen ausgewählt werden:
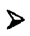 Potenzgesetz-Modell
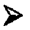 Herschel-Bulkley-Modell
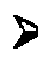 Cross-Modell.

20. Verfahren nach einem der Ansprüche 1 bis 19, **dadurch gekennzeichnet, dass** die verwendeten Randbedingungen aus der folgenden Gruppe von Randbedingungen ausgewählt werden:
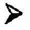 Fluidgeschwindigkeit an der Wand ist Null bzw. Vorliegen von Wandhaftung
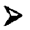 Fluidgeschwindigkeit an der Wand ist nicht Null bzw. Vorliegen von Wandgleitung
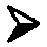 Fliessgrenze in einem Bereich der Fluidströmung unterschritten bzw. Pfropfen in der Strömung vorhanden
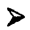 Fliessgrenze in keinem Bereich der Fluidströmung unterschritten bzw. kein Pfropfen in der Strömung vorhanden
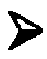 Strömungszustand: laminar
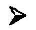 Strömungszustand: turbulent.

21. Verfahren nach einem der Ansprüche 1 bis 20, **dadurch gekennzeichnet, dass** zumindest ein Teil der bestimmten rheologischen Parameter des Fluids mit Werten dieser Parameter verglichen werden, die auf andere Art bestimmt wurden.

22. Verfahren nach Anspruch 21, **dadurch gekennzeichnet, dass** die andere Art der Bestimmung der rheologischen Parameter die Messung der Viskosität in einem Rotationsrheometer und/oder in einem Kapillar-Rheometer ist.

23. Verfahren nach Anspruch 14 bis 22, **dadurch gekennzeichnet, dass** die statistische Schwankungsgrösse, insbesondere die Standardabweichung, bestimmt wird für mindestens:
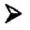 die erfassten Geschwindigkeitssignale jedes Geschwindigkeitskanals (= Ort am Geschwindigkeitsprofil);
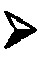 die lokal gemessenen Schubspannungssignale;
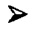 lokale Drucksignale an Druckmessstellen.

24. Anordnung zum Bestimmen rheologischer Parameter eines strömenden Fluids (2) unter Verwendung des Verfahrens nach einem der Ansprüche 1 bis 23, wobei die Anordnung aufweist:
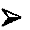 mindestens einen Wandbereich (1), der ein in der Vorrichtung strömendes Fluid zumindest in Teilbereichen der Fluidgrenzfläche berührt und begrenzt;
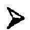 einen Ultraschallsender (3) zum Einstrahlen eines Ultraschallsignals mit mindestens einer vorgegebenen Frequenz f1 unter einem von 90° verschiedenen Winkel Θ zur Strömungsrichtung eines in der Vorrichtung strömenden Fluids;
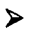 einen Ultraschallempfänger (3) zum Empfangen eines Ultraschallsignals mit mindestens einer Frequenz f2, die gegenüber der Frequenz f1 um eine Frequenzverschiebung Δf verschobenen sein kann;
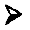 mindestens einen Schubspannungssensor (6) zum Erfassen einer Wandschubspannung in mindestens einem die Wand berührenden Bereich des Fluids;
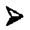 eine Rechen- und Verarbeitungseinheit zum Berechnen von Frequenzdifferenzen und zum Zuordnen einer bestimmten Frequenzdifferenz zu einem jeweiligen Fluidbereich unter Verwendung einer jeweiligen Zeitdifferenz zwischen Aussendung und Empfang eines Ultraschallsignals; zum Berechnen der Fluidgeschwindigkeit eines jeweiligen Fluidbereichs unter Verwendung der jeweiligen Frequenzverschiebung; und zum Berechnen rheologischer Parameter des Fluids unter Verwendung der erfassten Wandschubspannung des Fluids und der berechneten Fluidgeschwindigkeit der jeweiligen Fluidbereiche des strömenden Fluids.

25. Anordnung nach Anspruch 24, **dadurch gekennzeichnet, dass** sie nur einen Schubspannungssensor (6) aufweist, der in dem mindestens einen Wandbereich angeordnet ist, zum Erfassen einer Wandschubspannung in mindestens einem die Wand berührenden Bereich des Fluids (2).

26. Anordnung nach Anspruch 24 oder 25, **dadurch gekennzeichnet, dass** der Ultraschallsender und der Ultraschallempfänger in einem Ultraschall-Senderempfänger (3) vereint sind.

27. Anordnung nach einem der Ansprüche 24 bis 26, **dadurch gekennzeichnet, dass** der Schubspannungssensor (6), der Ultraschallsender (3) und der Ultraschallempfänger (3) bzw. der Ultraschall-Senderempfänger (3) in dem mindestens einen Wandbereich angeordnet sind.

28. Anordnung nach Anspruch 24, **dadurch gekennzeichnet, dass** sie mindestens einen ersten Wandbereich und einen zweiten Wandbereich aufweist, zwischen denen jeweils ein in der Vorrichtung strömendes Fluid fliessen kann und die zumindest in Teilbereichen die Fluidgrenzfläche berühren und begrenzen.

29. Anordnung nach Anspruch 28, **dadurch gekennzeichnet, dass** in dem ersten Wandbereich ein Ultraschallsender und in dem zweiten Wandbereich ein Ultraschalleinpfänger angeordnet ist.

30. Anordnung nach Anspruch 28, **dadurch gekennzeichnet, dass** in dem ersten Wandbereich ein erster Ultraschall-Senderempfänger angeordnet ist und in dem zweiten Wandbereich ein zweiter Ultraschall-Senderempfänger angeordnet ist.

31. Anordnung nach einem der Ansprüche 18 bis 30, **dadurch gekennzeichnet, dass** in dem ersten Wandbereich ein erster Ultraschall-Senderempfänger und ein erster Schubspannungssensor angeordnet sind und in dem zweiten Wandbereich ein zweiter Ultraschall-Senderempfänger und ein zweiter Schubspannungssensor angeordnet sind.

32. Anordnung nach einem der Ansprüche 24 bis 31, **dadurch gekennzeichnet, dass** der Wandbereich die Innenwand eines Rohr- bzw. Kanalabschnitts (1) ist, der in eine Rohrleitung bzw. einen Kanal für den Fluidtransport integrierbar ist.

33. Anordnung nach einem der Ansprüche 26 bis 32, **dadurch gekennzeichnet, dass** der Ultraschall-Senderempfänger (3) und der Schubspannungssensor (6) in einer kompakten Ultraschall-Senderempfänger/Schubspannungssensor-Messwandlereinheit integriert sind.

34. Anordnung nach einem der Ansprüche 26 bis 33, **dadurch gekennzeichnet, dass** sie einen Drucksensor aufweist.

## Claims

1. Method for determining rheological parameters of a flowing fluid, in particular a suspension or emulsion, the fluid flow being limited, at least in sections, by a wall touching the fluid, and the method having the following steps:
a) injecting an ultrasonic signal transmitted from an ultrasonic transmitter into the fluid flow at at least one predefined first frequency f1 at an angle Θ to the direction of flow, which angle is different from 90°;
b) receiving an ultrasonic signal reflected by particles carried along in the fluid in respective fluid regions in an ultrasonic receiver at at least one second frequency f2 which is characteristic of the respective fluid region and has been shifted by a respective frequency shift Δf with respect to the frequency f1;
c) detecting the local wall shear stress in at least one region of the fluid touching the wall;
d) calculating the at least one frequency shift Δf using the at least one first frequency f1 and the at least one second frequency f2;
e) assigning the respective frequency shift Δf to a respective fluid region using the respective propagation time of the ultrasonic signal between the time at which the signal leaves the ultrasonic transmitter and the time at which the signal is received by the ultrasonic receiver;
f) calculating the fluid velocity of the respective fluid region, in which the reflective particles are carried along, using the respective frequency shift;
g) calculating rheological parameters of the fluid using the wall shear stress of the fluid detected in the at least one local wall region and the calculated fluid velocity of the respective local fluid regions of the flowing fluid.

2. Method according to Claim 1, **characterized in that** the emitted ultrasonic signal is a signal having a plurality of discrete first frequencies (f1, f1', f1" , ...) and the received ultrasonic signal is at least one second signal having a respective plurality of discrete second frequencies (f2, f2', f2", ...) which have each been shifted by a frequency shift Δf characteristic of the respective fluid region with respect to the respective first frequencies (f1, f1', f1", ...).

3. Method according to Claim 1, **characterized in that** the emitted ultrasonic signal is a signal having a first frequency spectrum (FS1) and the received ultrasonic signal is at least one second signal having a respective second frequency spectrum (FS2) which has been respectively shifted by a frequency shift Δf characteristic of the respective fluid region with respect to the first frequency spectrum (FS1).

4. Method according to one of Claims 1 to 3, **characterized in that** the emitted ultrasonic signal and the received ultrasonic signal are each pulsed signals.

5. Method according to Claim 4, **characterized in that** the pulsed signals each have a constant carrier frequency.

6. Method according to one of Claims 1 to 3, **characterized in that** the emitted ultrasonic signal and the received ultrasonic signal are each continuous signals.

7. Method according to one of Claims 1 to 6, **characterized in that**, in step c), 1 the wall shear stress is detected in only one region of the fluid which touches the wall.

8. Method according to one of Claims 1 to 7, **characterized in that** the emission of the ultrasonic signal injected into the fluid and the reception of the reflected ultrasonic signal are carried out at the same location.

9. Method according to one of Claims 1 to 8, **characterized in that** a local velocity profile transverse to the direction of flow is created from the flow velocities of the fluid regions of the fluid which are calculated in step f).

10. Method according to Claim 9, **characterized in that** the viscosity function (shear viscosity) of the fluid is determined in at least one region of the fluid which touches the wall from the local velocity profile calculated in step f) and the local wall shear stress detected in step c).

11. Method according to one of Claims 1 to 10, **characterized in that** an appropriate model is adapted by iteratively adapting a model-based theoretical velocity profile to a measured velocity profile.

12. Method according to Claim 11, **characterized in that** the measured velocity profiles are treated before adaptation.

13. Method according to Claim 12, **characterized in that** the treatment is temporal averaging of the measured velocity profiles.

14. Method according to one of Claims 1 to 13, **characterized in that** a statistical fluctuation variable, in particular the standard deviation, is respectively determined from the measured wall shear stresses and/or from the determined velocity profiles and is compared with a predefined limit value for the fluctuation variable.

15. Method according to Claim 14, **characterized in that** the comparison is used as the basis for selecting reliable measurement data.

16. Method according to one of Claims 1 to 15, **characterized in that** an appropriate model is selected by checking the boundary conditions used in the model.

17. Method according to Claim 16, **characterized in that** the boundary conditions are checked by counting futile iteration steps in the attempted adaptation of a model.

18. Method according to Claim 17, **characterized in that** a different model with different parameters and/or different boundary conditions is selected when a predefined number of iteration steps is exceeded.

19. Method according to one of Claims 1 to 18, **characterized in that** the models used are selected from the following group of models:
► power law model
► Herschel-Bulkley model
► Cross model.

20. Method according to one of Claims 1 to 19, **characterized in that** the boundary conditions used are selected from the following group of boundary conditions:
► fluid velocity at the wall is zero, wall adhesion is present
► fluid velocity at the wall is not zero, wall sliding is present
► flow limit undershot in a region of the fluid flow, stopper present in the flow
► fluid limit not undershot in any region of the fluid flow, no stopper present in the flow
► flow state: laminar
► flow state: turbulent.

21. Method according to one of Claims 1 to 20, **characterized in that** at least some of the determined rheological parameters of the fluid are compared with values of these parameters which were determined in a different manner.

22. Method according to Claim 21, **characterized in that** the different manner of determining the rheological parameters is to measure the viscosity in a rotational rheometer and/or in a capillary rheometer.

23. Method according to Claims 14 to 22, **characterized in that** the statistical fluctuation variable, in particular the standard deviation, is determined for at least:
► the detected velocity signals of each velocity channel (= location on the velocity profile);
► the locally measured shear stress signals;
► local pressure signals at pressure measuring points.

24. Arrangement for determining rheological parameters of a flowing fluid (2) using the method according to one of Claims 1 to 23, the arrangement having:
► at least one wall region (1) which touches and limits a fluid flowing in the apparatus at least in sections of the fluid interface;
► an ultrasonic transmitter (3) for injecting an ultrasonic signal at at least one predefined frequency f1 at an angle Θ to the direction of flow of a fluid flowing in the apparatus, which angle is different from 90°;
► an ultrasonic receiver (3) for receiving an ultrasonic signal at at least one frequency f2 which may have been shifted by a frequency shift Δf with respect to the frequency f1;
► at least one shear stress sensor (6) for detecting a wall shear stress in at least one region of the fluid touching the wall;
► a computing and processing unit for calculating frequency differences and for assigning a particular frequency difference to a respective fluid region using a respective time difference between the emission and reception of an ultrasonic signal; for calculating the fluid velocity of a respective fluid region using the respective frequency shift; and for calculating rheological parameters of the fluid using the detected wall shear stress of the fluid and the calculated fluid velocity of the respective fluid regions of the flowing fluid.

25. Arrangement according to Claim 24, **characterized in that** it has only one shear stress sensor (6) which is arranged in the at least one wall region and is intended to detect a wall shear stress in at least one region of the fluid (2) which touches the wall.

26. Arrangement according to Claim 24 or 25, **characterized in that** the ultrasonic transmitter and the ultrasonic receiver are combined in an ultrasonic transceiver (3).

27. Arrangement according to one of Claims 24 to 26, **characterized in that** the shear stress sensor (6), the ultrasonic transmitter (3) and the ultrasonic receiver (3) or the ultrasonic transceiver (3) are arranged in the at least one wall region.

28. Arrangement according to Claim 24, **characterized in that** it has at least one first wall region and one second wall region, between which a fluid flowing in the apparatus can respectively flow and which touch and limit the fluid interface at least in sections.

29. Arrangement according to Claim 28, **characterized in that** an ultrasonic transmitter is arranged in the first wall region and an ultrasonic receiver is arranged in the second wall region.

30. Arrangement according to Claim 28, **characterized in that** a first ultrasonic transceiver is arranged in the first wall region and a second ultrasonic transceiver is arranged in the second wall region.

31. Arrangement according to one of Claims 18 to 30, **characterized in that** a first ultrasonic transceiver and a first shear stress sensor are arranged in the first wall region and a second ultrasonic transceiver and a second shear stress sensor are arranged in the second wall region.

32. Arrangement according to one of Claims 24 to 31, **characterized in that** the wall region is the inner wall of a pipe or channel section (1) which can be integrated in a pipeline or a channel for transporting fluid.

33. Arrangement according to one of Claims 26 to 32, **characterized in that** the ultrasonic transceiver (3) and the shear stress sensor (6) are integrated in a compact ultrasonic transceiver/shear stress sensor measuring transducer unit.

34. Arrangement according to one of Claims 26 to 33, **characterized in that** it has a pressure sensor.

## Revendications

1. Procédé pour déterminer des paramètres rhéologiques d'un fluide en circulation, notamment une suspension ou une émulsion, la circulation du fluide étant limitée au moins dans des zones partielles par une paroi en contact avec le fluide et le procédé présentant les étapes suivantes :
a) injection d'un signal ultrasonique émis depuis un émetteur d'ultrasons ayant au moins une première fréquence prédéfinie f1 sous un angle Θ différent de 90° par rapport au sens de la circulation dans la circulation de fluide ;
b) réception dans un récepteur d'ultrasons d'un signal ultrasonique qui est réfléchi par des particules emportées dans le fluide dans les zones de fluide correspondantes, ayant au moins une deuxième fréquence f2 caractéristique de la zone de fluide correspondante, laquelle est décalée par rapport à la fréquence f1 d'un décalage en fréquence Δf correspondant ;
c) détection de la contrainte de cisaillement de paroi dans au moins une zone du fluide qui est en contact avec la paroi ;
d) calcul de l'au moins un décalage en fréquence Δf en utilisant l'au moins une première fréquence f1 et l'au moins une deuxième fréquence f2 ;
e) affectation du décalage en fréquence Δf correspondant à une zone de fluide correspondante en utilisant le temps de propagation correspondant du signal ultrasonique entre l'instant où il quitte l'émetteur d'ultrasons et l'instant de la réception par le récepteur d'ultrasons ;
f) calcul de la vitesse du fluide de la zone de fluide correspondante, dans laquelle sont emportées les particules réfléchissantes, en utilisant le décalage en fréquence correspondant ;
g) calcul de paramètres rhéologiques du fluide en utilisant la contrainte de cisaillement de paroi du fluide détectée dans l'au moins une zone de paroi locale et la vitesse calculée du fluide des zones de fluide locales correspondantes du fluide en circulation.

2. Procédé selon la revendication 1, **caractérisé en ce que** le signal ultrasonique émis est un signal ayant plusieurs premières fréquences discrètes (f1, f1' , f1" , ...) et le signal ultrasonique reçu est au moins un deuxième signal ayant à chaque fois plusieurs deuxièmes fréquences discrètes (f2, f2', f2", ...), lesquelles sont décalées par rapport aux premières fréquences (f1, f1' , f1", ...) correspondantes à chaque fois d'un décalage en fréquence Δf caractéristique pour la zone de fluide correspondante.

3. Procédé selon la revendication 1, **caractérisé en ce que** le signal ultrasonique émis est un signal ayant un premier spectre de fréquences (FS1) et le signal ultrasonique reçu est au moins un deuxième signal ayant à chaque fois un deuxième spectre de fréquences (FS2), lequel est décalé par rapport au premier spectre de fréquences (FS1) correspondant à chaque fois d'un décalage en fréquence Δf caractéristique pour la zone de fluide correspondante.

4. Procédé selon l'une des revendications 1 à 3, **caractérisé en ce que** les signaux ultrasoniques émis et reçu sont à chaque fois des signaux pulsés.

5. Procédé selon la revendication 4, **caractérisé en ce que** les signaux pulsés présentent à chaque fois une fréquence porteuse constante.

6. Procédé selon l'une des revendications 1 à 3, **caractérisé en ce que** les signaux ultrasoniques émis et reçu sont à chaque fois des signaux continus.

7. Procédé selon l'une des revendications 1 à 6, **caractérisé en ce qu'**à l'étape c), la détection de la contrainte de cisaillement de paroi est effectuée seulement dans une zone du fluide qui est en contact avec la paroi.

8. Procédé selon l'une des revendications 1 à 7, **caractérisé en ce que** l'émission du signal ultrasonique injecté dans le fluide et la réception du signal ultrasonique réfléchi ont lieu au même endroit.

9. Procédé selon l'une des revendications 1 à 8, **caractérisé en ce qu'**un profil de vitesse local transversal au sens de la circulation est établi à partir des vitesses du fluide, calculées à l'étape f), des zones de fluide du fluide.

10. Procédé selon la revendication 9, **caractérisé en ce que** la fonction de viscosité (viscosité de cisaillement) du fluide est déterminée dans au moins une zone du fluide qui est en contact avec la paroi à partir du profil de vitesse local calculé à l'étape f) et de la contrainte de cisaillement de paroi locale détectée à l'étape c).

11. Procédé selon l'une des revendications 1 à 10, **caractérisé en ce que** l'adaptation d'un modèle adapté est réalisée par adaptation itérative d'un profil de vitesse théorique basé sur un modèle à un profil de vitesse mesuré.

12. Procédé selon la revendication 11, **caractérisé en ce que** les profils de vitesse mesurés sont traités avant l'adaptation.

13. Procédé selon la revendication 12, **caractérisé en ce que** le traitement est un calcul de la moyenne dans le temps des profils de vitesse mesurés.

14. Procédé selon l'une des revendications 1 à 13, **caractérisé en ce qu'**une grandeur de fluctuation statistique, notamment l'écart type, est déterminée à partir des contraintes de cisaillement de paroi mesurées et/ou des profils de vitesse déterminés, puis comparée avec une valeur limite prédéfinie pour la grandeur de fluctuation.

15. Procédé selon la revendication 14, **caractérisé en ce que** la comparaison est utilisée comme base pour la sélection de données de mesure fiables.

16. Procédé selon l'une des revendications 1 à 15, **caractérisé en ce que** la sélection d'un modèle adapté s'effectue en contrôlant les conditions aux limites utilisées dans le modèle.

17. Procédé selon la revendication 16, **caractérisé en ce que** le contrôle des conditions aux limites s'effectue en comptant les étapes d'itération infructueuses lors de la tentative d'adaptation d'un modèle.

18. Procédé selon la revendication 17, **caractérisé en ce qu'**en cas de dépassement d'un nombre prédéfini d'étapes d'itération, un autre modèle ayant d'autres paramètres et/ou d'autres conditions aux limites est sélectionné.

19. Procédé selon l'une des revendications 1 à 18, **caractérisé en ce que** les modèles utilisés sont sélectionnés parmi le groupe de modèles suivant :
> Modèle de loi des puissances
> Modèle de Herschel-Bulkley
> Modèle de Cross.

20. Procédé selon l'une des revendications 1 à 19, **caractérisé en ce que** les conditions aux limites sont sélectionnées parmi le groupe de conditions aux limites suivant :
> La vitesse du fluide contre la paroi est nulle, présence d'adhérence à la paroi
> La vitesse du fluide contre la paroi est non nulle, présence de glissement contre la paroi
> Limite de liquidité franchie vers le bas dans une zone de circulation du fluide, présence de bouchons dans la circulation
> Limite de liquidité franchie vers le bas dans aucune zone de circulation du fluide, aucun bouchon présent dans la circulation
> État la circulation : laminaire
> État la circulation : turbulent.

21. Procédé selon l'une des revendications 1 à 20, **caractérisé en ce qu'**au moins une partie des paramètres rhéologiques déterminés du fluide est comparée avec des valeurs de ces paramètres qui ont été déterminées d'une autre manière.

22. Procédé selon la revendication 21, **caractérisé en ce que** l'autre manière de déterminer les paramètres rhéologiques est la mesure de la viscosité dans un rhéomètre rotatif et/ou dans un rhéomètre capillaire.

23. Procédé selon l'une des revendications 14 à 22, **caractérisé en ce que** la grandeur de fluctuation statistique, notamment l'écart type, est déterminée pour au moins :
> les signaux de vitesse captés de chaque canal de vitesse (= endroit sur le profil de vitesse) ;
> les signaux de contrainte de cisaillement mesurés localement ;
> les signaux de pression locaux aux points de mesure de la pression.

24. Arrangement pour déterminer des paramètres rhéologiques d'un fluide (2) en circulation en utilisant le procédé selon l'une des revendications 1 à 23, l'arrangement présentant :
> au moins une zone de paroi (1) qui est en contact avec un fluide en circulation dans le dispositif et délimite celui-ci au moins dans des zones partielles de la surface limite du fluide ;
> un émetteur d'ultrasons (3) pour injecter un signal ultrasonique ayant au moins une fréquence prédéfinie f1 sous un angle Θ différent de 90° par rapport au sens de la circulation d'un fluide qui circule dans le dispositif ;
> un récepteur d'ultrasons (3) pour recevoir un signal ultrasonique ayant au moins une fréquence f2, laquelle peut être décalée par rapport à la fréquence f1 d'un décalage en fréquence Δf ;
> au moins un détecteur de contrainte de cisaillement (6) pour détecter une contrainte de cisaillement de paroi dans au moins une zone du fluide qui est en contact avec la paroi ;
> une unité de calcul et de traitement pour calculer les différences de fréquence et pour affecter une différence de fréquence définie à une zone de fluide correspondante en utilisant une différence dans le temps correspondante entre l'émission et la réception d'un signal ultrasonique ; pour calculer la vitesse du fluide d'une zone de fluide correspondante en utilisant le décalage en fréquence correspondant ; et pour calculer les paramètres rhéologiques du fluide en utilisant la contrainte de cisaillement de paroi du fluide détectée et la vitesse calculée du fluide des zones de fluide correspondantes du fluide en circulation.

25. Arrangement selon la revendication 24, **caractérisé en ce qu'**il ne présente qu'un seul détecteur de contrainte de cisaillement (6), lequel est disposé dans l'au moins une zone de paroi pour détecter une contrainte de cisaillement de paroi dans au moins une zone du fluide (2) qui est en contact avec la paroi.

26. Arrangement selon la revendication 24 ou 25, caractérisé en ce l'émetteur d'ultrasons et le récepteur d'ultrasons sont réunis en un émetteur/récepteur d'ultrasons (3).

27. Arrangement selon l'une des revendications 24 à 26, **caractérisé en ce que** le détecteur de contrainte de cisaillement (6), l'émetteur d'ultrasons (3) et le récepteur d'ultrasons (3) ou l'émetteur/récepteur d'ultrasons (3) sont disposés dans l'au moins une zone de paroi.

28. Arrangement selon la revendication 24, **caractérisé en ce qu'**il présente au moins une première zone de paroi et une deuxième zone de paroi entre lesquelles peut à chaque fois s'écouler un fluide qui circule dans le dispositif et qui sont en contact avec la surface limite du fluide et délimitent celle-ci au moins dans des zones partielles.

29. Arrangement selon la revendication 28, **caractérisé en ce qu'**un émetteur d'ultrasons est disposé dans la première zone de paroi et un récepteur d'ultrasons dans la deuxième zone de paroi.

30. Arrangement selon la revendication 28, **caractérisé en ce qu'**un premier émetteur/récepteur d'ultrasons est disposé dans la première zone de paroi et un deuxième émetteur/récepteur d'ultrasons est disposé dans la deuxième zone de paroi.

31. Arrangement selon l'une des revendications 18 à 30, **caractérisé en ce qu'**un premier émetteur/récepteur d'ultrasons et un premier détecteur de contrainte de cisaillement sont disposés dans la première zone de paroi et un deuxième émetteur/récepteur d'ultrasons et un deuxième détecteur de contrainte de cisaillement sont disposés dans la deuxième zone de paroi.

32. Arrangement selon l'une des revendications 24 à 31, **caractérisé en ce que** la zone de paroi est la paroi intérieure d'une section de tube ou de canalisation (1) qui peut être intégrée dans une conduite tubulaire ou une canalisation pour le transport d'un fluide.

33. Arrangement selon l'une des revendications 26 à 32, **caractérisé en ce que** l'émetteur/récepteur d'ultrasons (3) et le détecteur de contrainte de cisaillement (6) sont intégrés dans une unité transducteur de mesure compacte à émetteur/récepteur d'ultrasons/détecteur de contrainte de cisaillement.

34. Arrangement selon l'une des revendications 26 à 33, **caractérisé en ce qu'**il présente un capteur de pression.
